# EUROPEAN PATENT APPLICATION

(11) **EP 4 186 723 A1**
(43) Date of publication of application: **31.05.2023**
(21) Application number: 21211538.0
(22) Date of filing: 30.11.2021
(51) Int. Cl.: B60H 1/00, B60H 1/22, F24H 3/04, H05B 3/06, H05B 3/34

(54) **HEATING STRUCTURE**

(71) Applicant: VALEO SYSTEMES THERMIQUES, 78320 Le Mesnil Saint-Denis (FR)
(72) Inventor: VILLINGER, Markus, 6142 Mieders (AT)
(74) Representative: Valeo Systèmes Thermiques

(57) **Abstract**

A heating structure (1), in particular a flexible structure, to be installed inside a passenger cabin of a vehicle, the heating structure (1) being in particular a radiant panel, the heating structure (1) comprising a plurality of resistive strips (2) configured to provide heat when an electric current flows through these resistive strips (2) and an array of electrodes (3) arranged to be in electrical contact with the resistive strips (2) so as to cause an electrical current to flow through the resistive strips (2), wherein the resistive strips (2) are spaced apart from each other and each strip (2) has a plurality of holes (5).

## Description

The present invention relates to a heating structure to be installed inside a passenger cabin of a vehicle, for example a car, this heating structure being in particular a radiant panel.

Heating structures play an active role in the comfort in a vehicle cabin. The surface of the structure heats the passengers by infrared radiation while heating the air inside the cabin by convection or by contact (for example in the case of an armrest). They have shapes and dimensions adapted to their location in the vehicle. The heating structures can be integrated in a seat, a dashboard, a roof, a pillar, an armrest, a door panel, etc. A heating structure can therefore be seen as an interface whose main function is to ensure thermal comfort within the vehicle cabin.

A heating structure, in particular a radiant panel, is a device generally comprising an electrical circuit configured to deliver heat by Joule effect by supplying electric current to resistive conducting elements.

The present invention aims to improve the comfort felt by the passengers.

The invention thus relates to a heating structure, in particular a flexible structure, to be installed inside a passenger cabin of a vehicle, this heating structure being in particular a radiant panel, the heating structure comprising:
- a plurality of resistive strips configured to provide heat when an electric current flows through these resistive strips,
- an array of electrodes arranged to be in electrical contact with the resistive strips so as to cause an electrical current to flow through these resistive strips,
characterized in that the resistive strips are spaced apart from each other and each strip has a plurality of holes.

The presence of a plurality of strips together with holes made therein provides softness properties to the heating structure since a higher flexibility is allowed with such a configuration. When the heating structure is integrated in a component of the cabin, the invention provides a softness feeling when the passenger comes in contact with said component.

The invention also enables to enhance the heat diffusion by better distributing the heat on the surface of the heating structure, for instance by avoiding overheating areas.

When some air can circulate in the vicinity of the heating structure, the air can flow through the holes and a better heat distribution can be achieved by this air circulation.

According to one aspect of the invention, one of the strips has a rectangular shape, in particular all the strips have a rectangular shape.

According to one aspect of the invention, at least one of the strips has a general zigzag shape, in particular all of the strips have a general zigzag shape.

According to one aspect of the invention, the structure comprises strips of different shapes and/or different dimensions.

The invention thus offers the option to adjust the resistive strip shapes/ dimensions to the heat needs.

According to one aspect of the invention, the strips are spaced with a constant pitch between them.

According to one aspect of the invention, each strip is formed by a coating of a resistive material, particularly in the form of a paint of a resistive material.

According to one aspect of the invention, the strips are obtained by printing a resistive material.

According to one aspect of the invention, in each resistive strip the holes are arranged in a regular pattern, in particular in a plurality of parallel rows and the holes being spaced apart by a constant pitch in each row.

According to one aspect of the invention, the pattern formed by the holes extends over the major portion of the corresponding resistive strip.

According to one aspect of the invention, the holes have a rounded shape, particularly a circular shape.

According to one aspect of the invention, the diameter of the holes is smaller than 20% or even 10% of the maximum width of the strip. This enables to have a higher density of smaller holes, which may increase the softness feeling.

According to one aspect of the invention, the holes have a polygonal shape, for example a trapezoidal shape.

According to one aspect of the invention, said heating structure comprises a support configured to carry or integrate the electrode array and the resistive strips.

According to one aspect of the invention, the electrode array comprises main electrodes and secondary electrodes connected to the main electrodes.

According to one aspect of the invention, the main electrodes are parallel to each other and the secondary electrodes are perpendicular to the main electrodes.

According to one aspect of the invention, the secondary electrodes alternately connect to one and the other of the main electrodes, and are arranged in the gap between the main electrodes.

According to one aspect of the invention, the main electrodes and the secondary electrodes are straight.

According to one aspect of the invention, the electrodes and/or the resistive strips can be made by screen printing, offset printing, inkjet printing, additive manufacturing, hot stamping and transfer or electrodeposition.

According to one aspect of the invention, the support is made of a flexible material, capable of taking a predetermined shape by deformation, this support being in particular extensible. The material of the support can be chosen in a non-limiting way among: a non-woven textile, a fabric, or a stretchable textile or a stretchable knitted fabric.

According to one aspect of the invention, the elements of the heating structure, namely the support, the resistive strips and the electrodes, form a flexible and extensible assembly.

When the support is a fabric, the stretchability can be achieved either by the arrangement of the woven structure, i.e., by the weaving technique, or by the intrinsic stretchability of the yarns used for weaving.

According to one aspect of the invention, the non-woven textile may comprise a blend of polypropylene fibers and/or polyester fibers. Other fibers may be used, such as natural fibers.

According to one aspect of the invention, the support may be made of a thermoplastic material. The thermoplastic material is preferably selected from the following list: a polycarbonate and/or polyethylene terephthalate and/or polymethyl methacrylate and/or polybuthylene terephthalate and/or a polyamide material and/or a polyolefin and/or a copolymer material and/or an elastomer material.

The invention also relates to a heating assembly to be installed in a vehicle passenger cabin, characterized in that it comprises a heating structure as disclosed above and at least one additional layer arranged to cover the heating structure.

According to one aspect of the invention, said at least one additional layer is selected from: a thermal insulation layer and/or a protective layer of the heating structure.

According to an aspect of the invention, said heating structure and said at least one additional layer are arranged in contact with each other.

According to an aspect of the invention, said at least one additional layer is selected from: a thermal insulation layer and/or a layer for protecting the heating structure. The thermal insulation layer may, for example, be a layer of material having thermal insulation properties (e.g., felt or felt strip, polyurethane foam, polyethylene foam) and allowing to avoid heat dissipation to areas not allowing to heat the passenger cabin.

According to one aspect of the invention, the heating structure is interposed between the thermal insulation layer and the protective layer.

According to one aspect of the invention, the protective layer faces the vehicle interior and the thermal insulation layer faces the vehicle exterior. In this arrangement, a majority of the heat generated by the resistive layer of the radiant panel is dissipated to the passenger cabin of the vehicle, with the thermal insulation layer limiting the amount of heat dissipated to the exterior of the passenger cabin.

According to one aspect of the invention, the protective layer has a function of dressing or decorating the heating structure. The purpose of such a function is to give an aesthetic appearance to the heating structure and thus allow it to be integrated into the vehicle interior, in particular on a door panel or on a roof. The protective layer can be made of fabric, leather, wood, paint or any other material allowing the aesthetic insertion of the heating structure in the passenger cabin. The layer is thus arranged to impart a fabric appearance, a leather appearance, a wood appearance, or any other appearance deemed necessary to aesthetically integrate the heating structure into the passenger cabin.

According to one aspect of the invention, the thermal insulation layer has a mechanical holding function with respect to the heating structure. In this arrangement, this layer is arranged to allow the deposition and retention of the heating structure on the thermal insulation layer. The thermal insulation layer comprises, for example, a material having electrical insulation properties, high adhesion and/or low roughness. Such a material is for instance selected from polyimide such as Kapton, or polyethylene terephthalate such as Mylar ^{®}.

The invention also relates to a vehicle interior component, in particular a component configured to be integrated into a door, an underbody or a roof of the vehicle, or the interior component may be selected from a part of a dashboard such as a glove box, a seat, a seat element such as a headrest or a seat back, a footwell and/or an armrest, characterized in that said vehicle interior component comprises a heating assembly as disclosed above.

Further features, details and advantages of the invention will become apparent from the description given below in relation to the drawings in which:
- Figure 1 is a schematic representation of an example of a heating structure according to the present invention,
- Figures 2 is a schematic representation of a component having the heating structure of Figure 1, in cross section,
- Figures 3 is a schematic representation of a heating structure according to another embodiment of the invention,
- Figure 4 is a schematic representation of another example of a heating structure according to the present invention.

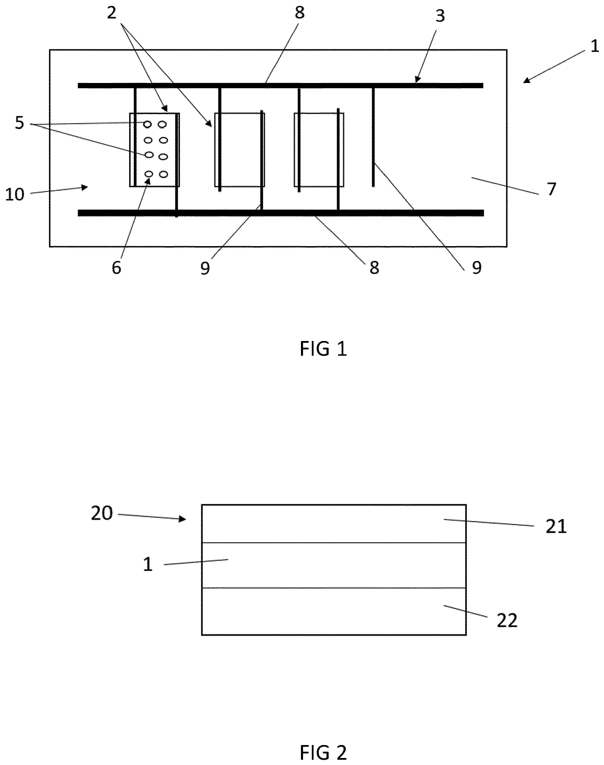

Figure 1 shows a heating structure 1 to be installed inside a passenger cabin of a vehicle, this heating structure 1 forming a radiant panel, the heating structure 1 comprising:
- a plurality of resistive strips 2 configured to provide heat when an electric current flows through these resistive strips 2,
- an array of electrodes 3 arranged to be in electrical contact with the resistive strips 2 so as to cause an electrical current to flow through these resistive strips 2.

The resistive strips 2 are spaced apart from each other and each strip 2 has a plurality of holes 5.

The presence of a plurality of strips 2 together with holes 5 made therein provides softness properties to the heating structure 1 since a higher flexibility is allowed with such a configuration.

The invention also enables to enhance the heat diffusion by better distributing the heat on the surface of the heating structure 1, for instance by avoiding overheating areas.

When some air can circulate in the vicinity of the heating structure 1, the air can flow through the holes 5 and a better heat distribution can be achieved by this air circulation.

In the present embodiment of the invention, the strips 2 have a rectangular shape.

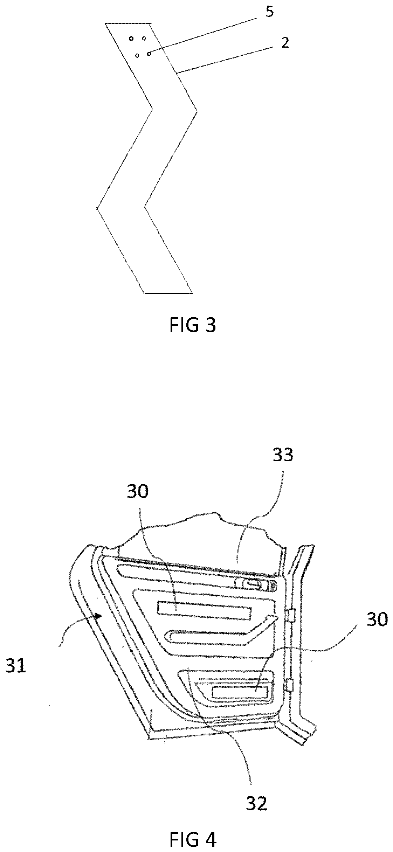

In another embodiment of the invention illustrated in Figure 3, all of the strips 2 have a general zigzag shape.

The strips 2 are spaced with a constant pitch between them.

Each strip 2 is formed by a coating of a resistive material, particularly in the form of a paint of a resistive material.

The strips 2 can be obtained by printing a resistive material.

In each resistive strip 2, the holes 5 are arranged in a regular pattern 6, in particular in a plurality of parallel rows and the holes being spaced apart by a constant pitch in each row.

The pattern 6 formed by the holes extends over the major portion of the corresponding resistive strip 2.

The holes 5 have a rounded shape, particularly a circular shape.

The diameter of the holes is smaller than 20% or even 10% of the maximum width of the strip 2.

The heating structure 1 comprises a support 7 configured to carry or integrate the electrode array 3 and the resistive strips 2.

The electrode array 3 comprises main electrodes 8 and secondary electrodes 9 connected to the main electrodes.

The main electrodes 8 are parallel to each other and the secondary electrodes 9 are perpendicular to the main electrodes.

The secondary electrodes 9 alternately connect to one and the other of the main electrodes 8, and are arranged in the gap 10 between the main electrodes.

The main electrodes 8 and the secondary electrodes 9 are straight.

The electrodes 8, 9 and/or the resistive strips 2 can be made by screen printing, offset printing, inkjet printing, additive manufacturing, hot stamping and transfer or electrodeposition.

The support 7 is made of a flexible material, capable of taking a predetermined shape by deformation, this support 7 being in particular extensible. The material of the support can be chosen in a non-limiting way among: a non-woven textile, a fabric, or a stretchable textile or a stretchable knitted fabric.

The non-woven textile may comprise a blend of polypropylene fibers and/or polyester fibers. Other fibers may be used, such as natural fibers.

An additional layer can be a support made of a thermoplastic material. The thermoplastic material is preferably selected from the following list: a polycarbonate and/or polyethylene terephthalate and/or polymethyl methacrylate and/or polybuthylene terephthalate and/or a polyamide material and/or a polyolefin and/or a copolymer material and/or an elastomer material.

A heating assembly 20 comprises a heating structure 1 as disclosed above and additional layers 21, 22 arranged to cover the heating structure 1.

An additional layer is a thermal insulation layer 21.

Another additional layer is a layer 22 for protecting the heating structure 1.

The thermal insulation layer 21 may, for example, be a layer of material having thermal insulation properties (e.g., felt or felt strip, polyurethane foam, polyethylene foam) and allowing to avoid heat dissipation to areas not allowing to heat the passenger cabin.

The heating structure 1 is interposed between the thermal insulation layer 21 and the protective layer 22, as illustrated in figure 2.

The protective layer 22 faces the vehicle interior and the thermal insulation layer 21 faces the vehicle exterior. In this arrangement, a majority of the heat generated by the resistive strips 2 of the radiant panel is dissipated to the passenger cabin of the vehicle, with the thermal insulation layer 21 limiting the amount of heat dissipated to the exterior of the passenger cabin.

The protective layer 22 has a function of dressing or decorating the heating structure. The purpose of such a function is to give an aesthetic appearance to the heating structure and thus allow it to be integrated into the vehicle interior, in particular on a door panel or on a roof. The protective layer can be made of fabric, leather, wood, paint or any other material allowing the aesthetic insertion of the heating structure in the passenger cabin. The layer is thus arranged to impart a fabric appearance, a leather appearance, a wood appearance, or any other appearance deemed necessary to aesthetically integrate the heating structure into the passenger cabin.

According to one aspect of the invention, the thermal insulation layer 21 has a mechanical holding function with respect to the heating structure. In this arrangement, this layer is arranged to allow the deposition and retention of the heating structure on the thermal insulation layer. The thermal insulation layer comprises, for example, a material having electrical insulation properties, high adhesion and/or low roughness. Such a material is for instance selected from polyimide such as Kapton, or polyethylene terephthalate such as Mylar ^{®}.

A vehicle interior component 30 is illustrated in Figure 3, in particular a component configured to be integrated into a door 31, said vehicle interior component comprises a heating assembly 20 as disclosed above.

Said component 30 further comprises a door panel 32. The door comprises a window 33.

## Claims

1. A heating structure (1), in particular a flexible structure, to be installed inside a passenger cabin of a vehicle, this heating structure being in particular a radiant panel, the heating structure (1) comprising:
- a plurality of resistive strips (2) configured to provide heat when an electric current flows through these resistive strips,
- an array of electrodes (3) arranged to be in electrical contact with the resistive strips so as to cause an electrical current to flow through these resistive strips
**characterized in that** the resistive strips are spaced apart from each other and each strip has a plurality of holes (5).

2. Heating structure according to claim 1, **characterized in that** one of the strips has a rectangular shape, in particular all the strips have a rectangular shape.

3. The heating structure according to claim 1, **characterized in that** at least one of the strips (2) has a general zigzag shape, in particular all of the strips have a general zigzag shape.

4. The heating structure according to any one of the preceding claims, **characterized in that** the strips (2) are spaced with a constant pitch between them.

5. The heating structure according to any one of the preceding claims, **characterized in that** each strip (2) is formed by a coating of a resistive material, particularly in the form of a paint of a resistive material.

6. The heating structure according to any one of claims 1 to 4, **characterized in that** the strips are obtained by printing a resistive material.

7. The heating structure according to any one of the preceding claims, **characterized in that** in each resistive strip, the holes (5) are arranged in a regular pattern, in particular in a plurality of parallel rows and the holes (5) being spaced apart by a constant pitch in each row.

8. The heating structure according to the preceding claim, **characterized in that** the pattern formed by the holes (5) extends over the major portion of the corresponding resistive strip (2).

9. The heating structure according to any one of the preceding claims, **characterized in that** the holes (5) have a rounded shape, particularly a circular shape.

10. The heating structure according to any one of the preceding claims, **characterized in that** the diameter of the holes (5) is smaller than 20% or even 10% of the maximum width of the strip.

11. The heating structure according to any one of claims 1 to 8, **characterized in that** the holes (5) have a polygonal shape, for example a trapezoidal shape.

12. The heating structure according to any one of the preceding claims, **characterized in that** said heating structure (1) comprises a support (7) configured to carry or integrate the electrode array and the resistive strips (2).

13. A heating assembly (20) to be installed in a vehicle passenger cabin, **characterized in that** it comprises a heating structure (1) according to any one of the preceding claims and at least one additional layer arranged to cover the heating structure.

14. The heating assembly (20) according to claim 13, **characterized in that** said at least one additional layer is selected from: a thermal insulation layer and/or a protective layer of the heating structure.

15. A vehicle interior component (30), in particular a component configured to be integrated into a door, an underbody or a roof of the vehicle, or the interior component may be selected from a part of a dashboard such as a glove box, a seat, a seat element such as a headrest or a seat back, a footwell and/or an armrest, **characterized in that** said vehicle interior component (30) comprises a heating assembly (20) according to claims 13 or 14.
